Europäisches Patentamt

European Patent Office

Office européen des brevets

(19)

(11) **EP 1 500 672 A2**

(12) **EUROPEAN PATENT APPLICATION**

(43) Date of publication:
26.01.2005 Bulletin 2005/04

(51) Int Cl.⁷: **C08H 5/04**, C08L 97/02,
B60R 27/00

(21) Application number: 04017326.2

(22) Date of filing: 22.07.2004

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **24.07.2003 JP 2003279223**

(71) Applicants:
• **Kabushiki Kaisha Toyota Jidoshokki
Kariya-shi, Aichi-ken 448-8671 (JP)**
• **Fuji Carbon Co., Ltd.
Koka-gun Shiga-ken, 520-3401 (JP)**

(72) Inventors:
• **Shimo, Toshihisa
Kariya-shi Aichi-ken, 448-8671 (JP)**

• **Hayashi, Hidetaka
Kariya-shi Aichi-ken, 448-8671 (JP)**
• **Yao, Yaoguang
Koka-gun Shiga-ken, 520-3401 (JP)**
• **Kitagawa, Chuji
Koka-gun Shiga-ken, 520-3401 (JP)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(54) **Woody resin for molding in-vehicle component parts, process for producing the same, woody resinous material for molding in-vehicle component parts and in-vehicle component parts molded from the same**

(57)    A woody resin is for molding in-vehicle component parts, is produced by a co-condensation reaction of a woody material and phenols, and includes the woody material exhibiting a dehydration ratio of from 27 to 42% by weight by the co-condensation reaction, and the phenols bonded to the woody material in an amount of from 150 to 240 parts by weight with respect to 100 parts by weight of the woody material. The woody resin is compounded with a curing agent and a filler to make a woody resinous material for molding in-vehicle component parts.

EP 1 500 672 A2

**Description**

BACKGROUND OF THE INVENTION

Field of the Invention

The present invention relates to a woody resin used to mold in-vehicle component parts, a process for producing the same, a woody resinous material for molding in-vehicle component parts, woody resinous material whose major component is the woody resin, and an in-vehicle component part molded from the same.

Description of the Related Art

Phenol resins have been used extensively for molding materials and adhesives, because they are good in terms of the heat resistance, dimensional stability and mechanical strength, and because the physical properties and the cost are well balanced. Phenol resins are usually produced by reacting phenols with aldehydes in the presence of an acidic or basic catalyst. On the other hand, in view of the problems of the fossil resource depletion and the environmental problems, such as the global warming and air pollution, it has been desired to develop materials which exert much less load to the environments.

For example, Japanese Unexamined Patent Publication (KOKAI) No. 4-63,834 discloses a process for producing thermosetting resins, such as phenol resins, by reacting phenols with lignocellulose, such as wood flour, instead of aldehydes, from the viewpoint of considering the resource problems and the environmental problems and utilizing the wood resources effectively. Moreover, Japanese Unexamined Patent Publication (KOKAI) No. 3-43,442 discloses a process for making molding materials by resinifying lignocellulose being soluble into phenols in the presence of an formaldehyde source and followed by compounding a filler and a curing agent with the resulting resin.

In addition to high mechanical strength, in-vehicle component parts are required to be able to maintain the high mechanical strength even after they are used in high-temperature and high-humidity environments for a long period of time, namely, they are required to exhibit high heat resistance and high moisture resistance. However, when molded products are molded from the molding materials set forth in Japanese Unexamined Patent Publication (KOKAI) No. 4-63,834 and Japanese Unexamined Patent Publication (KOKAI) No. 3-43,442, the physical properties of the resulting molded products, such as mechanical strength, are remarkably inferior to those of conventional phenol resins. Moreover, woody materials such as wood flour comprise hydrophilic hydrocarbons as the major component. Therefore, resins including woody materials exhibit high hydrophilicity. Specifically, resins including woody materials are likely to absorb moisture. Accordingly, molded products molded from resins including woody materials exhibit low moisture resistance. Consequently, it is not possible to mold in-vehicle component parts, which can withstand service in high-temperature and high-humidity environments for a long period of time, from the molding materials prepared from the resulting resin set forth in the above patent publications.

SUMMARY OF THE INVENTION

The present invention has been developed in view of such circumstances. It is therefore an object of the present invention to provide a woody resin from which in-vehicle component parts being of high mechanical strength, heat resistance and moisture resistance can be molded, and a process for producing the same. Moreover, it is another object of the present invention to provide a woody resinous material whose major component is such a woody resin and which is useful for molding in-vehicle component parts. In addition, it is still another object of the present invention to provide an in-vehicle component part which exhibits high mechanical strength, heat resistance and moisture resistance.

A woody resin according to the present invention for molding in-vehicle component parts is produced by a co-condensation reaction of a woody material and phenols, and comprises:

the woody material exhibiting a dehydration ratio of from 27 to 42% by weight by the co-condensation reaction; and the phenols bonded to the woody material in an amount of from 150 to 240 parts by weight with respect to 100 parts by weight of the woody material.

The co-condensation of woody materials and phenols is referred to as a phenolization reaction of woody materials as well. In the co-condensation reaction, the intra molecular bonds of cellulose, hemicelluolse and lignin are split to various degrees, and phenols are introduced into the decomposed components such as lignin side chains. Thus, thermoplastic resins are generated, and simultaneously the solving of woody materials is promoted so that the co-condensation reaction is more likely to develop. The present woody resin for molding in-vehicle component parts (hereinafter abbreviated to as the "present woody resin" wherever appropriate) is resins which are produced by'the co-condensation reaction, and includes the decomposition products of woody materials themselves and the bonded products of the components of woody materials and phenols.

In the present woody resin, the woody material exhibits a dehydration ratio of from 27 to 42% by weight by the co-condensation reaction. Here, the "dehydration ratio of woody material" is an index of how much water is generated from the molecules of raw woody material (i.e., the dehydration of hydrocarbons making woody components, for example) during the co-condensation reaction, and is calculated by following equation (a).

$$\text{Dehydration Ratio of Woody Material (\% by weight)} = [\{(\text{Water}$$

$$\text{Content of Product after Reaction}) - (\text{Water Content of Raw Material}$$

$$\text{Mixture before Reaction})\}/\{(\text{Dry Weight of Charged Woody Material})$$

$$- (\text{Weight of Unreacted Woody Material})\}] \times 100 \qquad (a)$$

In equation (a) , the "Water Content of Product after Reaction" and "Water Content of Raw Material Mixture before Reaction" can be obtained by measuring the water contents of raw material mixture and product before and after the reaction with a Karl-Fischer moisture meter, respectively. Moreover, the "Weight of Unreacted Woody Material" can be measured by solving products after the co-condensation reaction into methanol and followed by filtering out, drying and weighing unsolved contents (the procedure being the same in following equation (b)).

In the present woody resin, the content of bonded phenols falls in a range of from 150 to 240 parts by weight. Here, the "content of bonded phenols" is a content of phenols bonded to 100 parts by weight of the woody material, and is calculated by following equation (b).

$$\text{Content of Bonded Phenols (parts by weight)} = [\{(\text{Weight of}$$

$$\text{Charged Phenols}) - (\text{Weight of Remaining Phenols after}$$

$$\text{Reaction})\}/\{(\text{Dry Weight of Charged Woody Material}) - (\text{Weight of}$$

$$\text{Unreacted Woody Material})\}] \times 100 \qquad (b)$$

In equation (b), the "Weight of Remaining Phenols after Reaction" is a weight of free phenols remaining in products after the co-condensation reaction. The weight of free phenols can be measured by gas chromatography or high-speed liquid chromatography.

As described above, the woody material reacts with the phenols. At the same time, the hydroxide groups included in the woody material itself are diminished by intra-molecular and inter-molecular dehydration and condensation reactions. When diminishing the hydroxide groups, namely, when enlarging the dehydration ratio to increase bonds with the phenols in the co-condensation reaction, it is possible to lower the hydrophilicity of generating woody resins. On the other hand, when the dehydration enlarges too much and bonds with the phenols increase excessively, the molecular weight of resulting woody resins enlarges so that the fluidity degrades. The lower fluidity results in poor moldability.

The water content and molecular weight of the thus generated present woody resin are optimized, because the dehydration ratio of the woody material and the content of the bonded phenols are limited to fall in the above-described ranges. Accordingly, the present woody resin exhibits low hydrophilicity and good moldability. Moreover, even when the present woody resin is exposed to high temperatures during molding, further dehydration is less likely to occur newly, because the water content of the present woody resin is optimized. Consequently, the heat resistance of the present woody resin is enhanced, because the present woody resin is inhibited from being decomposed by dehydration at high temperatures.

Thus, when using the present woody resin, it is possible to mold in-vehicle component parts whose mechanical strength, heat resistance and moisture resistance are high. Moreover, the present woody resin exerts less load to the environments, because it does not use aldehydes which have been used conventionally.

A process for producing the present woody resin is not limited in particular. However, it is possible to produce the present woody resin with ease and with a high yield by a production process according to the present invention, for example. Specifically, a process according to the present invention for producing a woody resin for molding in-vehicle component parts comprises steps of:

> preparing a raw material mixture by mixing phenols in an amount of from 200 to 1, 000 parts by weight and an acid catalyst in an amount of from 0.5 to 10 parts by weight with a woody material in an amount of 100 parts by weight;
> reacting the woody material with the phenols by means of a co-condensation reaction by heating the raw material mixture to a temperature of from 135 to 170°C so that the woody material exhibits a dehydration ratio of from 27 to 42% by weight by the co-condensation reaction, and the phenols are bonded to the woody material in an amount of from 150 to 240 parts by weight with respect to 100 parts by weight of the woody material.

In the present production process, the co-condensation reaction is developed so that the dehydration ratio of woody material and the content of bonded phenols fall in the predetermined ranges, because the charged amount of phenols and the charged amount of acid catalyst are controlled with respect to the charged amount of woody material as described above, and because the reaction temperature is further controlled within the above-described range. When the charged amounts of phenols and acid catalyst are thus controlled, it is possible to facilitate the reaction of woody material with phenols, and to lower the hydrophilicity of generating woody resins. Moreover, it is simultaneously possible to inhibit woody resins from polymerizing excessively, and accordingly to inhibit the fluidity of woody resins from degrading.

The present woody resinous material for molding in-vehicle component parts (hereinafter abbreviated to as the "present woody resinous material" wherever appropriate) comprises: the above-described present woody resin; a curing agent; and a filler. The present woody resinous material comprises the present woody resin as the major component. The present woody resin is a thermoplastic resin. Accordingly, the present woody resinous material is turned into a thermosetting resin by compounding the present woody resin with a curing agent. Moreover, a filler is compounded in the present woody resinous material. Compounding a filler can further enhance the dimensional stability and mechanical strength of in-vehicle component parts molded form the present woody resinous material. Thus, in accordance with the present woody resinous material, it is possible to mold in-vehicle components which are of much higher mechanical strength and are good in terms of the heat resistance and moisture resistance.

An in-vehicle component part according to the present invention is molded from the above-described present woody resinous material. As described above, in-vehicle component parts molded from the present woody resinous material exhibit high mechanical strength, heat resistance and moisture resistance. Therefore, the present in-vehicle component part can fully withstand service even in high-temperature and high-humidity environments for a long period of time.

In accordance with the present woody resin and woody resinous material, it is possible to mold in-vehicle component parts which are good in terms of the mechanical strength, heat resistance and moisture resistance. Moreover, the present production process can produce the present woody resin with ease and with a high yield. In addition, the present in-vehicle component part exhibits high mechanical strength, heat resistance and moisture resistance.

BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure.

Fig. 1 shows photographs of test samples molded from woody resins according to Example No. 1a of the present invention and Comparative Example No. 1a after they were left at 50°C in 95% relative humidity for 1,000 hours.

Fig. 2 illustrates a schematic perspective view of a major portion of a wear resistance testing apparatus for pulleys.

DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

The present woody resin for molding in-vehicle component parts, the present process for producing the same, the present woody resinous material for molding in-vehicle component parts, and the present in-vehicle component part will be hereinafter described in detail. Note that the present woody resin and the like are not limited to the fol'lowing specific embodiments. It will be possible for one of ordinary skill in the art to carry out the present woody resin and so forth in various modes provided with such changes and modifications that he or she can think of.

<Woody Resin for Molding In-vehicle Component Parts>

The present woody resin is produced by a co-condensation reaction of a woody material and phenols, and comprises the woody material exhibiting a dehydration ratio of from 27 to 42% by weight by the co-condensation reaction and the phenols bonded to the woody material in an amount of from 150 to 240 parts by weight with respect to 100 parts by weight of the woody material.

As for the woody material used in producing the present woody resin, it is possible to name lignocellulose substances such as trees, bamboos, kenafs, wood fibers, wood chips, sawdust, pulps and used papers. Taking the operability and the rate of reaction with phenols into consideration, it is desirable to pulverize the lignocellulose substances and use them in a form of pulverized chips or powders.

Moreover, as for the phenols, it is possible to name phenol, cresols, xylenols and resorcinols. It is possible to use them independently, or to mix two or more of them to use. Considering the cost and reactivity, it is desirable to use phenols. Moreover, the phenols can coexist with a modifying agent. As for the modifying agent, it is possible to name aromatic hydrocarbons, such as toluene, xylenes and mesitylene, drying oils, such as wood oil and flat seed oil, dicyclopentadiene.

In the present woody resin, the woody material exhibits a dehydration ratio of from 27 to 42% by weight by the co-condensation reaction. When the woody material exhibits a dehydration ratio of less than 27% by weight by the co-condensation reaction, it is not possible to say that the moisture resistance and heat resistance of the resulting woody resins are satisfactory. It is more suitable that the dehydration ratio can be 30% by weight or more. On the other hand, when the woody material exhibits a dehydration ratio of more than 42% by weight by the co-condensation reaction, the resultant. woody resins exhibit lower fluidity so that the moldability degrades. It is more suitable that the dehydration ratio can be 38% by weight or less.

In the present woody resin, the content of phenols bonded to 100 parts by weight of the woody material falls in a range of from 150 to 240 parts by weight. When the content of the bonded phenols is less than 150 parts by weight with respect to 100 parts by weight of the woody material, it is not possible to say that the moisture resistance and heat resistance of the resulting woody resins are satisfactory. It is more suitable that the content of the bonded phenols can be 170 parts by weight or more with respect to 100 parts by weight of the woody material. On the other hand, when the content of the bonded phenols is more than 240 parts by weight with respect to 100 parts by weight of the woody material, the resultant woody resins exhibit lower fluidity so that the moldability degrades. It is more suitable that the content of the bonded phenols can be 210 parts by weight or less with respect to 100 parts by weight of the woody material.

The softening point of the present woody resin is not limited in particular. However, when the softening point is 110C° or less, it is possible to further upgrade the moldability of the present woody resin. Note that the softening point set forth in the present specification shall be measured according to JIS (i.e., Japanese Industrial Standard) K6910-1999.

<Process for Producing Woody Resin for Molding In-vehicle Component Parts>

The present process for producing a woody resin comprises a raw material mixture preparation step, and a co-condensation reaction step. The respective steps will be hereinafter described in this order.

(1) Raw Material Mixture Preparation Step

In this step, from 200 to 1,000 parts by weight of phenols and from 0.5 to 10 parts by weight of an acid catalyst are mixed with 100 parts by weight of a woody material, thereby preparing a raw material mixture.

As for the woody material and phenols making the raw material mixture, it is possible to use those materials listed for the above-described present woody resin. Here, the amount of the charged phenols falls in a range of from 200 to 1,000 parts by weight with respect to 100 parts by weight of the woody material. When the amount of the charged phenols is less than 200 parts by weight with respect to 100 parts by weight of the woody material, the moisture resistance and heat resistance of the resulting woody resins lower because the woody material is not fully phenolized. It is more suitable that the amount of the charged phenols can be 300 parts by weight or more with respect to 100 parts by weight of the woody material. On the other hand, when the amount of the charged phenols is more than 1,000 parts by weight, the yield of the woody resin decreases because the amount of unreacted phenols increases. It is more suitable that the amount of the charged phenols can be 700 parts by weight or less with respect to 100 parts by weight of the woody material. Specifically, it is preferable that the amount of the charged phenols can fall in a range of from 300 parts to 700 parts by weight, further from 320 to 500 parts by weight, with respect to 100 parts by weight of the woody material.

The type of the acid catalyst is not limited in particular. For example, it is possible to name mineral acids, such as sulfuric acid, hydrochloric acid and phosphoric acid, organic acids such as toluenesulfonic acid and phenolsulfonic acid, and Lewis acids, such as aluminum chloride, zinc chloride and boron trifluoride. Among them, it is desirable to use sulfuric acid, for not only it exhibits high activity but also it is less expensive. The amount of the charged acid catalyst falls in a range of from 0.5 to 10 parts by weight with respect to 100 parts by weight of the woody material. When the amount of the charged acid catalyst is less than 0.5 parts by weight with respect to 100 parts by weight of the woody material, the moisture resistance and heat resistance of the resulting woody resins lower because the phenolization of the woody material is less likely to develop. It is more suitable that the amount of the charged acid catalyst can be 1 part by weight or more with respect to 100 parts by weight of the woody material. On the other hand, when the amount of the charged acid catalyst is more than 10 parts by weight, the resulting woody resins are polymerized excessively, and simultaneously the cross-linking reactions are likely to occur. As a result, the fluidity of the resultant woody resins lowers so that the moldability deteriorates. It is more suitable that the amount of the charged acid catalyst can be 5 parts by weight or less with respect to 100 parts by weight of the woody material. Specifically, it is preferable that the amount of the charged acid catalyst can fall in a range of from 1 to 5 parts by weight, further from 1.5 to 4 parts by weight, with respect to 100 parts by weight of the woody material.

(2) Co-condensation Reaction Step

In this step, the raw material mixture prepared at the raw material mixture preparation step is heated to a temperature of from 135 to 175 °C, thereby reacting the woody material with the phenols by means of a co-condensation reaction. As a result, the woody material exhibits a dehydration ratio of from 27 to 42% by weight by the co-condensation reaction, and the phenols are bonded to the woody material in an amount of from 150 to 240 parts by weight with respect to 100 parts by weight of the woody.material.

In this step, the raw material mixture is heated to a temperature of from 135 to 175°C. When the temperature is less than 135°C, it takes longer to produce desired woody resins so that it is not practical, because the co-condensation reaction is less likely to develop. On the other hand, when the temperature is more than 170 °C, the reactivity and yield of the co-condensation reaction degrade, because the woody material is likely to decompose thermally. Moreover, it is preferable that the heating temperature can fall in a range of from 140 to 165°C.

In this step, it is desirable to stir and reflux the raw material mixture when heating it in order to facilitate the co-condensation reaction. The reaction time can be controlled appropriately so that the dehydration ratio of the woody material and the amount of the bonded phenols fall in the predetermined ranges. For example, the reaction time can be from 0.5 to 3 hours when sulfuric acid is used as the acid catalyst.

As described above, the present production process comprises two steps, the raw material mixture preparation step and the co-condensation reaction step. However, it is possible to produce the present woody resin by carrying out the raw material mixture preparation step and the co-condensation reaction step parallelly. In this instance, it is possible, for example, to develop the co-condensation reaction while putting the woody material into a mixture of the phenols and acid catalyst which has been heated preliminarily.

Unreacted phenols (or free phenols) exist usually in the products after the co-condensation reaction. A large amount of free phenols degrade the moldability and physical properties of the resulting woody resins. Accordingly, it is desirable to remove free phenols from the products after the co-condensation reaction. It is possible to remove free phenols by washing with water, extracting with solvents, steam distillation or vacuum distillation, for instance. In view of the operability and cost, vacuum distillation is a suitable option. For example, vacuum distillation can be carried under such conditions that the temperature falls in a range of from 120 to 200°C and the pressure falls in a range of from 2.67 to 13.3 kPa. Note that the content of free phenols in the present woody resin can desirably be 5% by weight or less when the present woody resin is taken as 100% by weight. It is more suitable that the content of free phenols in the present woody resin can be 2% by weight or less when the present woody resin is taken as 100% by weight. Specifically, it is preferable that the content of free phenols in the present woody resin can fall in a range of from 0 to 5% by weight, further from 0 to 2% by weight, furthermore from 0 to 1% by weight, when the present woody resin is taken as 100% by weight.

<Woody Resinous Material for Molding In-vehicle Component Parts>

The present woody resinous material comprises the above-described present woody resin, a curing agent, and a filler. As for the curing agent, it is possible to use those used for ordinary phenol resins, such as hexamethylene tetramine. The compounding amount of the curing agent is not limited in particular. It is desirable to compound the curing agent in an amount of 5 parts by weight or more with respect to 100 parts by weight of the present woody resin in order to let the curing agent fully demonstrate the curing action. It is more suitable that the compounding amount of the curing agent can be 8 parts by weight or more with respect to 100 parts by weight of the present woody resin. Moreover, from the viewpoint of inhibiting gases from generating in the curing reaction and making defects less likely to occur in the molded products, it is desirable to compound the curing agent in an amount of 25 parts by weight or less with respect to 100 parts by weight of the present woody resin. It is more suitable that the compounding amount of the curing agent can be 20 parts by weight or less with respect to 100 parts by weight of the present woody resin. Specifically, it is preferable that the compounding amount of the curing agent can fall in a range of from 5 to 25 parts by weight, further from 8 to 20 parts by weight, furthermore from 12 to 20 parts by weight, with respect to 100 parts by weight of the present woody resin.

As for the filler, it is possible to name reinforcing fibers, such as hemp fibers, kenaf fibers, glass fibers, carbon fibers, phosphor fibers and boron fibers, hydrated metallic oxides, such as aluminum hydroxide and magnesium hydroxide, metallic carbonates, such as magnesium carbonate and calcium carbonate, metallic borate, such as magnesium borate, silica, mica, molten silica, wood flour, cellulose and wood pulps. Among them, it is desirable to use glass fibers, due to the reasons that the exhibit high strength and are weakly hygroscopic. Moreover, it is desirable to use natural organic fibers, such as hemp fibers and kenaf fibers, for they exert load less to the environments. When using natural organic fibers, it is preferable to subject the surface of the fibers to a surface treatment for lowering the hygroscopicity in advance.

The compounding amount of the filler is not limited in particular. It is desirable to compound the filler in an amount of 50 parts by weight or more with respect to 100 parts by weight of the summed content of the present woody resin and curing resin in order to further improve the mechanical strength of molded products and to fully effect the advantage of compounding the filler. It is more suitable that the compounding amount of the filler can be 70 parts by weight or more with respect to 100 parts by weight of the summed content of the present woody resin and curing resin. Moreover, taking the moldability and the physical properties of molded products into consideration, it is desirable to compound the filler in an amount of 500 parts by weight or less with respect to 100 parts by weight of the summed content of the present woody resin and curing resin. It is more suitable that the compounding amount of the filler can be 400 parts by weight or less with respect to 100 parts by weight of the summed content of the present woody resin and curing resin. Specifically, it is preferable that the compounding amount of the filler can fall in a range of from 50 to 500 parts by weight, further from 70 to 400 parts by weight, furthermore from 80 to 300 parts by weight, with respect to 100 parts by weight of the summed content of the present woody resin and curing resin.

Moreover, the present woody resinous material can further comprise a variety of additives in addition to the curing agent and filler. As an example of the additives, it is possible to name a curing accelerator. As for the curing accelerator, it is possible to name the oxides or hydroxides of alkaline-earth metals, such as calcium oxide, magnesium oxide and calcium hydroxide, for instance. As another example of the additives, it is possible to name lubricants, such as zinc stearate and calcium stearate, internal mold-releasing agents, such as silicones and waxes, coupling agents, fire retardants, light stabilizers, antioxidants, pigments and extenders. These additives can be compounded into the present woody resinous material whenever specific needs arise.

The present woody resinous material can be produced, for example, by mixing the present woody resin with a curing agent and followed by adding a filler and an additive, if required, to and mixing them with the resulting mixture. A specific example for producing the present woody resinous material will be hereinafter described. First, the present woody resin and a curing agent are pulverized and mixed with each other by a mixer at room temperature. Subsequently, a filler and an additive, such as a curing accelerator, if necessary, are added to and mixed with the resultant mixture. Thereafter, the resulting raw material mixture is heated and kneaded at a temperature of from 80 to 100°C by a thermal roller or a twin-screw extruder. After cooling the kneaded product to room temperature, it is pulverized to produce a granular or powdery woody resinous material. From the thus produced present woody resinous material, molded products can be molded by various known molding methods. As for the molding methods, it is possible to name compression molding, transfer molding, injection molding and extrusion molding.

<In-vehicle Component Part>

The present in-vehicle component part is molded from the above-described present woody resinous material. As for the present in-vehicle component part, it is possible to name a variety of pulleys, gears, brake pistons, brake linings, oil caps, fuel pump impellers, heat insulators and interior component parts.

## EXAMPLES

Based on the above-described specific embodiments, the present woody resin was produced. Further, a woody resin of a comparative example was produced by altering the production conditions. Furthermore, the produced woody resins were compounded with a curing agent, a filler and additives to produce various woody resinous materials. Moreover, a predetermined test sample was molded from each of the woody resinous materials, and the bending characteristics were examined. In addition, a pulley was made from the produced present woody resinous material, and the wear resistance was evaluated. The examples of the present invention and the comparative examples will be hereinafter described in the aforementioned order.

(1) Production of Woody Resin

(Example No. 1)

First, 100 parts by weight of Norway spruce wood flour was charged in a separable flask equipped with a stirrer, a thermometer, a reflux condenser and a charging inlet. Thereafter, 500 parts by weight of phenol including 5 parts by weight of sulfuric acid was added to and mixed with the wood flour, thereby preparing a raw material mixture. Subsequently, the prepared raw material mixture was refluxed at a temperature of from 145 to 150°C for 2 hours while stirring it, thereby carrying out the co-condensation reaction of the woody flour and phenol. After completing the reaction, magnesium oxide was added to neutralize the after-reaction product. Thereafter, unreacted phenol was removed from the product by carrying out vacuum distillation at a temperature of 160°C at the highest. Thus, a woody resin was produced in an amount of 247 parts by weight. The dehydration ratio of the wood flour was 33% by weight by the co-condensation reaction; the content of the bonded phenol was 183 parts by weight with respect to 100 parts by weight of the wood flour; the free phenol occupied 1.2% by weight of the product after the co-condensation reaction; and the thus produced woody resin exhibited a softening point of 106.3°C. The resulting woody resin was one of the present woody resins, and was labeled as Example No. 1 thereof.

(Comparative Example No. 1)

Except that the reaction temperature was changed to 130 °C, a woody resin was produced in the same manner as the woody resin according to Example No. 1. Thus, a woody resin was produced in an amount of 199 parts by weight. The dehydration ratio of the wood flour was 26% by weight by the co-condensation reaction; the content of the bonded phenol was 125 parts by weight with respect to 100 parts by weight of the wood flour; the free phenol occupied 1.5% by weight of the product after the co-condensation reaction; and the thus produced woody resin exhibited a softening point of 102.7°C. The resulting woody resin was labeled as Comparative Example No. 1.

(Comparative Example No. 2)

Except that the amount of the charged phenol was changed to 180 parts by weight, a woody resin was produced in the same manner as the woody resin according to Example No. 1. Thus, a woody resin was produced in an amount of 179 parts by weight. The dehydration ratio of the wood flour was 32% by weight by the co-condensation reaction; the content of the bonded phenol was 110 parts by weight with respect to 100 parts by weight of the wood flour; the free phenol occupied 2.3% by weight of the product after the co-condensation reaction; and the thus produced woody resin exhibited a softening point of 126.0°C. The resulting woody resin was labeled as Comparative Example No. 2.

(2) Production of Woody Resinous Material

Woody resinous materials were produced by compounding a curing agent, a curing accelerator, a lubricant and a filler with the woody resins according to Example No. 1, Comparative Example No. 1 and Comparative Example No. 2 produced as described above. Note that two fillers, glass fibers and wood flour, were used as the filler and accordingly two woody resinous materials were produced for each of the woody resins.

With respect to 100 parts by weight of the respective woody resins, the following were prepared in advance: 15 parts by weight of hexamethylene tetramine as the curing agent, 5 parts by weight of calcium hydroxide as the curing accelerator, 2.5 parts by weight of zinc stearate as the lubricant, 220 parts by weight of glass fibers . First, the hexamethylene tetramine, the calcium hydroxide and the zinc stearate were added to and mixed with each of the woody resins. Then, the glass fibers were further added to and mixed with each of the resulting mixtures. Moreover, the resultant raw material mixtures were kneaded with a twin-screw extruder at 90°C with 60 rpm, respectively. The twin-screw extruder was manufactured by TOSHIBA KIKAI Co., Ltd., and the L/D ratio, the ratio of the length of the screws to the diameter thereof, was 24. Thereafter, the kneaded products were cooled to room temperature, and were pulverized with a power mill, respectively. Thus, powdery woody resinous materials were produced. The resulting woody resinous materials were identified as a woody resinous material according to Example No. 1a, a woody resinous material according to Comparative Example No. 1a and a woody resinous material according to Comparative Example No. 2a, respectively, so that they could be correlated with the used woody resins.

Except that the filler was changed from the glass fibers to the wood flour and was added in an amount of 122 parts by weight with respect to 100 parts by weight of the respective woody resins, woody resinous materials were produced in the same manner as described above. The resulting woody resinous materials were identified as a woody resinous material according to Example No. 1b, a woody resinous material according to Comparative Example No. 1b and a woody resinous material according to Comparative Example No. 2b, respectively, so that they could be correlated with the used woody resins.

(3) Examination of Bending Characteristics

A test sample for a bending test was molded from each of the woody resinous materials produced as described above. The test sample conformed to JIS K-6911 issued in 1995, and had a size of 4 $\times$ 10 $\times$ 100 mm. Note that the test sample was molded from the woody resinous materials by hot pressing with a compression molding mold. Specifically, the woody resinous materials were hot pressed at 175 °C under about 29.4 MPa for 5 minutes. The thus molded test samples were identified as a molded product according to Example No. 1a, and so forth.

The resulting test samples were subjected to a bending test to measure the flexural strength and the flexural elastic modulus. Note that the bending test was carried out according to the specifications of above JIS K-6911. Moreover, in order to evaluate the heat resistance of the test samples, the test samples were left at a high temperature of 150°C for 1,000 hours, and the flexural strength and the flexural elastic modulus were thereafter measured likewise as described above. In addition, in order to evaluate the high-temperature moisture resistance of the test samples, the test samples were left in such a high-temperature and high-humidity environment that the temperature was 50°C and the relative humidity was 95% for 1,000 hours, and the flexural strength and the flexural elastic modulus were thereafter measured similarly in the aforementioned manner. Table 1 below recites the results of the respective measurements.

TABLE 1

| | | Ex. No. 1a | Comp. Ex. No. 1a | Comp. Ex. No. 2a | Ex. No. 1b | Comp. Ex. No. 1b | Comp. Ex. No. 2b |
|---|---|---|---|---|---|---|---|
| Initially | Flexural Strength (MPa) | 123.5 | 117.7 | 110.3 | 98.2 | 95.4 | 76.1 |
| | Flexural Elastic Modulus (MPa) | 17800 | 16500 | 17200 | 8400 | 8100 | 8000 |
| After Leaving at 150 °C for 1,000 hr. | Flexural Strength (MPa) | 121.2 | 110.2 | 100.3 | 91.1 | 82.2 | 69.6 |
| | Flexural Elastic Modulus (MPa) | 17500 | 15700 | 16500 | 8300 | 7800 | 7500 |
| After Leaving at 50 °C in 95% Relative Humidity for 1,000 hr. | Flexural Strength (MPa) | 110.9 | 77.4 | 76.3 | 76.2 | 38.4 | 43.1 |
| | Flexural Elastic Modulus (MPa) | 16300 | 14300 | 15000 | 8100 | 3600 | 4000 |

First of all, the test samples according to Example No. 1a, Comparative Example Nos. 1a and 2a will be described which comprised the glass fibers as the filler. The test samples according to Example No. 1a exhibited high values for both of the initial flexural strength and flexural elastic modulus. Moreover, the flexural strength and flexural elastic modulus degraded less even after the test sample according to Example No. 1a was left in the high-temperature environment or in the high-temperature and high-humidity environment. On the other hand, the test samples according to Comparative Example Nos. 1a and 1b exhibited relatively high values for the initial flexural strength and flexural elastic modulus. However, the flexural strength and flexural elastic modulus degraded greatly after the test samples according to Comparative Example Nos. 1a and 2a were left in the high-temperature environment or in the high-temperature and high-humidity environment. In particular, the flexural strength and flexural elastic modulus degraded sharply after the test samples according to Comparative Example Nos. 1a and 2a were left in the high-temperature and high-humidity environment. Thus, it is understood that the test sample according to Example No. 1a, which was molded from the present woody resinous material, had improved heat resistance and moisture resistance, compared with the test samples according to Comparative Example Nos. 1a and 2a.

Next, the test samples according to Example No. 1b, Comparative Example Nos. 1b and 2b will be described which comprised the wood flour as the filler. All of these test samples exhibited lower values for the initial flexural strength and flexural elastic modulus than the test samples comprising the glass fibers. The phenomenon can be attributed to'the fact that the reinforcement effect resulting from glass fibers is more than that resulting from wood flour. Moreover, the test sample according to Example No. 1b showed the degraded flexural strength and flexural elastic modulus after it was left in the high-temperature and high-humidity environment. It is believed that the wood flour affected the degradation greatly. This is believed to result from the fact that the hygroscopicity of wood flour is higher than that of glass fibers. However, the test sample according to Example No. 1b exhibited the less degraded flexural strength and flexural elastic modulus than those of the test samples according to Comparative Example Nos. 1b and 2b after being left in the high-temperature environment or in the high-temperature and high-humidity environment. In particular, the difference is remarkable between the flexural strengths and flexural elastic moduli before and after being left in the high-temperature and high-humidity environment. For example, the test samples according to Comparative Example Nos. 1b and 2b showed the excessively degraded flexural strength and flexural elastic modulus after they were left in the high-temperature and high-humidity environment. Thus, it is appreciated that the heat resistance and moisture resistance of the test sample according to Example No. 1b, which was molded from the present woody resinous material, were enhanced more than those of the test samples according to Comparative Example Nos. 1b and 2b.

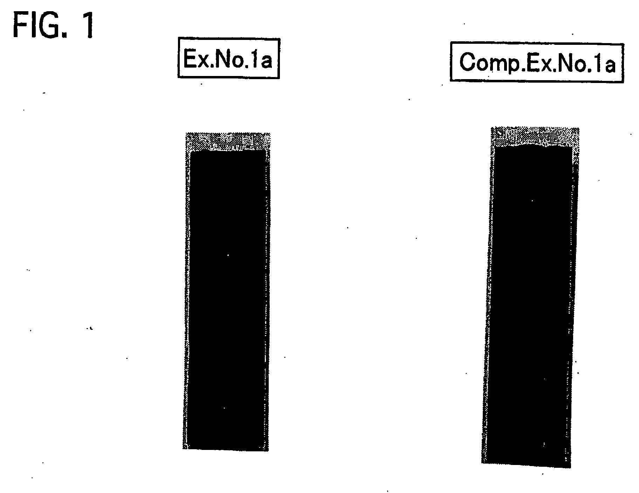

Moreover, the appearance of the respective test samples, which had been left in the high-temperature high-humidity environment, was observed visually. As a result, no cracks were observed in the test samples according to Example Nos. 1a and 1b. On the contrary, not only roughening occurred in the surface of the test samples according to Comparative Example Nos. 1a, 2a, 1b and 2b but also cracks were observed therein. As some of the examples, Fig. 1 depicts the photographs of the test samples according to Example No. 1a and Comparative Example No. 1a. From Fig. 1, it is possible to confirm the occurrence of roughening and even cracks in the surface of the test sample according to Comparative Example No. 1a when comparing the photograph of the test sample according to Example No. 1a with that of the test sample according to Comparative Example No. 1a. Thus, it is seen that the test samples according to Example Nos. 1a and 1b, which were molded from the present woody resinous materials, exhibited satisfactory moisture resistance.

(4) Molding of Pulley and Wear Resistance Evaluation of the Same

A pulley, one of in-vehicle component parts, was molded from the woody resinous material according to Example No. 1a. When molding the pulley, a compression molding machine was used, and the woody resinous material according to Example No. 1a was hot pressed for 10 minutes under the conditions that the mold temperature was 160 °C and the molding pressure was 30 MPa. The produced pulley had an outside diameter of $\phi$ 125 mm and a thickness of 30 mm, and was provided with a 3.1 mm-depth groove in the surface contacting with a belt. The resulting pulley will be hereinafter referred to as a woody resin pulley.

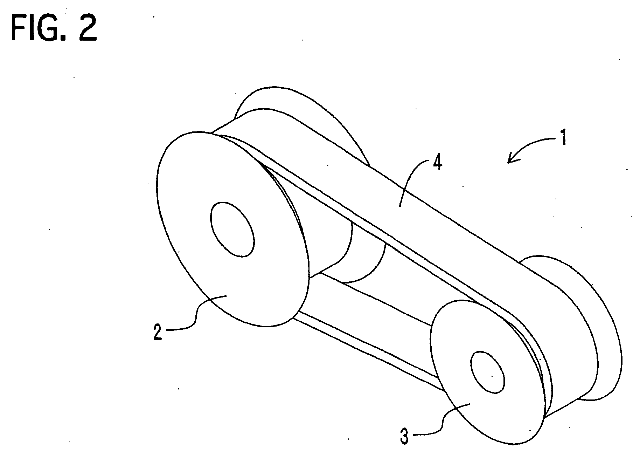

The wear resistance of the woody resin pulley was evaluated by using the following testing apparatus. Fig. 2 illustrates a schematic perspective view of a major portion of a wear resistance testing apparatus for pulleys. As illustrated in the drawing, a pulley-wear-resistance testing apparatus 1 comprised a driving pulley 2, a driven pulley 3, and a belt 4.

The driving pulley 2 was made of metal, and was installed to a motor (not shown) by way of a driving shaft (not shown). The driven pulley 3 was the woody resin pulley. The belt 4 was made of rubber, and was wound around the driving pulley 2 and driven pulley 3. A driving force was transmitted from the driving pulley 2 to the driving pulley 3 by way of the belt 4.

The pulley-wear-resistance testing apparatus 1 was operated for 200 hours while the tension of the belt 4 was controlled to 600 N and the driving pulley 3 was rotated at a revolving speed of 5,000 rpm. Thereafter, how the driven pulley 3 was worn was observed visually to assess the wear resistance of the woody resin pulley.

Moreover, for comparison, another pulley was molded from a phenol-resin molding material for molding in-vehicle component parts. Note that the phenol-resin molding material was produced by SUMITOMO BAKELITE Co., Ltd., and had a registered trade name, "SUMICON PM." The phenol resin pulley was used as the driven pulley 3 of the pulley-wear-resistance testing apparatus 1. The pulley-wear-resistance testing apparatus 1 was operated in the same manner as described above to evaluate the wear resistance of the phenol resin pulley.

As a result, no wear was observed in both of the woody resin pulley and the phenol resin pulley. Thus, it was possible to verify that the woody resin pulley exhibited wear resistance equivalent to that of the phenol resin pulley.

A woody resin is for molding in-vehicle component parts, is produced by a co-condensation reaction of a woody material and phenols, and includes the woody material exhibiting a dehydration ratio of from 27 to 42% by weight by the co-condensation reaction, and the phenols bonded to the woody material in an amount of from 150 to 240 parts by weight with respect to 100 parts by weight of the woody material. The woody resin is compounded with a curing agent and a filler to make a woody resinous material for molding in-vehicle component parts.

**Claims**

1. A woody resin for molding in-vehicle component parts, the woody resin produced by a co-condensation reaction of a woody material and phenols, and comprising:

   the woody material exhibiting a dehydration ratio of from 27 to 42% by weight by the co-condensation reaction; and
   the phenols bonded to the woody material in an amount of from 150 to 240 parts by weight with respect to 100 parts by weight of the woody material.

2. The woody resin set forth in claim 1 whose softening point is 110 °C or less.

3. The woody resin set forth in claim 1 comprising the woody material exhibiting a dehydration ratio of from 30 to 38% by weight by the co-condensation reaction.

4. The woody resin set forth in claim 1 comprising the phenols bonded to the woody material in an amount of from 170 to 210 parts by weight with respect to 100 parts by weight of the woody material.

5. The woody resin set forth in claim 1 whose content of free phenols is 5% by weight or less when the entirety is taken as 100% by weight.

6. A process for producing a woody resin for molding in-vehicle component parts, the process comprising the steps of:

   preparing a raw material mixture by mixing phenols in an amount of from 200 to 1, 000 parts by weight and an acid catalyst in an amount of from 0.5 to 10 parts by weight with a woody material in an amount of 100 parts by weight;
   reacting the woody material with the phenols by means of a co-condensation reaction by heating the raw material mixture to a temperature of from 135 to 170°C so that the woody material exhibits a dehydration ratio of from 27 to 42% by weight by the co-condensation reaction, and the phenols are bonded to the woody material in an amount of from 150 to 240 parts by weight with respect to 100 parts by weight of the woody material.

7. The process set forth in claim 6, wherein the phenols are mixed in an amount of from 300 parts to 700 parts by weight with respect to 100 parts by weight of the woody material.

8. The process set forth in claim 6, wherein the acid catalyst is mixed in an amount of from 1 to 5 parts by weight with respect to 100 parts by weight of the woody material.

9. The process set forth in claim 6, wherein the raw material mixture is heated to a temperature of from 140 to 165°C.

10. The process set forth in claim 6 further comprising a step of removing free phenols after the co-condensation reaction step.

11. A woody resinous material for molding in-vehicle component parts, the woody resinous material comprising:

the woody resin set forth'in claim 1;
a curing agent; and
a filler.

12. The woody resinous material set forth in claim 11 comprising at least one member selected from the group consisting of natural organic fibers and glass fibers as the filler.

13. The woody resinous material set forth in claim 11 comprising the curing agent in an amount of from 5 to 25 parts by weight with respect to 100 parts by weight of the woody resin.

14. The woody resinous material set forth in claim 11 comprising the filler in an amount of from 50 to 500 parts by weight with respect to 100 parts by weight of the summed content of the woody resin and curing resin.

15. An in-vehicle component part molded from the woody resinous material set forth in claim 11.

FIG. 1

Ex.No.1a

Comp.Ex.No.1a

FIG. 2